(19) Europäisches Patentamt
European Patent Office
Office européen des brevets

(11) EP 4 727 225 A1

(12) **EUROPEAN PATENT APPLICATION**
published in accordance with Art. 153(4) EPC

(43) Date of publication:
15.04.2026 Bulletin 2026/16

(21) Application number: 24830818.1

(22) Date of filing: 26.06.2024

(51) International Patent Classification (IPC):
*H04W 56/00* (2009.01)

(52) Cooperative Patent Classification (CPC):
H04W 36/08; H04W 56/00

(86) International application number:
PCT/CN2024/101648

(87) International publication number:
WO 2025/002181 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 CN 202310773398

(71) Applicants:
• CHINA MOBILE COMMUNICATION CO., LTD
RESEARCH INSTITUTE
Beijing 100053 (CN)

• CHINA MOBILE COMMUNICATIONS GROUP CO.,
LTD.
Beijing 100032 (CN)

(72) Inventor: ZHENG, Yi
Beijing 100053 (CN)

(74) Representative: Murgitroyd & Company
165-169 Scotland Street
Glasgow G5 8PL (GB)

(54) **TA ACQUISITION METHOD, APPARATUS, TERMINAL DEVICE AND NETWORK DEVICE**

(57) A Timing Advance (TA) obtaining method and apparatus, a terminal device, and a network device are provided. The method includes: receiving, by a terminal device, a first signaling sent by a network device, wherein the first signaling is used to instruct, or configure, or activate a first operation on a first cell, and the first operation includes at least one of the following: measurement, downlink synchronization, or uplink synchronization; performing, by the terminal device, the first operation on the first cell, and obtaining, by the terminal device, a Timing Advance (TA) of the first cell based on the first operation.

receiving, by a terminal device, a first signaling sent by a network device, wherein the first signaling is used to instruct, or configure, or activate a first operation on a first cell, and the first operation includes at least one of the following: measurement, downlink synchronization, or uplink synchronization — 301

performing, by the terminal device, the first operation on the first cell, and obtaining, by the terminal device, a TA of the first cell based on the first operation — 302

**FIG. 3**

EP 4 727 225 A1

## Description

### CROSS-REFERENCE TO RELATED APPLICATION

This application is based on and claims priority to Chinese patent application No. 202310773398.1 filed on June 27, 2023, a disclosure of which is incorporated herein by reference in its entirety.

### TECHNICAL FIELD

This application relates to the field of wireless communication technology, and in particular, to a Timing Advance (TA) obtaining method and apparatus, a terminal device, and a network device.

### BACKGROUND

Cell handover can cause interruption time of data transmission. To reduce the interruption time of data transmission, a terminal device need to perform downlink synchronization and uplink synchronization with a target cell before handover. The realization of uplink synchronization depends on obtaining of a Timing Advance (TA), and it is necessary to define how to manage the TA obtaining by the terminal device.

### SUMMARY

Embodiments of this application provides a Timing Advance (TA) obtaining method and apparatus, a terminal device, a network device, a chip, and a computer-readable storage medium.

The TA obtaining method provided in an embodiment of this application includes:

receiving, by a terminal device, a first signaling sent by a network device, wherein the first signaling is used to instruct, or configure, or activate a first operation on a first cell, and the first operation includes at least one of the following: measurement, downlink synchronization, or uplink synchronization;
performing, by the terminal device, the first operation on the first cell, and obtaining, by the terminal device, a Timing Advance (TA) of the first cell based on the first operation.

The TA obtaining method provided in an embodiment of this application includes:
sending, by a network device, a first signaling to a terminal device, wherein the first signaling is used to instruct, or configure, or activate a first operation on a first cell, and the first operation includes at least one of the following: measurement, downlink synchronization, or uplink synchronization, wherein the first operation is used to obtain a Timing Advance (TA) of the first cell.

The TA obtaining apparatus provided in an embodiment of this application, applied to a terminal device, includes:

a receiving unit, configured to receive a first signaling sent by a network device, wherein the first signaling is used to instruct, or configure, or activate a first operation on a first cell, and the first operation includes at least one of the following: measurement, downlink synchronization, or uplink synchronization; a determining unit, configured to perform the first operation on the first cell, and obtain a Timing Advance (TA) of the first cell based on the first operation.

The TA obtaining apparatus provided in an embodiment of this application, applied to a network device, includes:
a sending unit, configured to send a first signaling to a terminal device, wherein the first signaling is used to instruct, or configure, or activate a first operation on a first cell, and the first operation includes at least one of the following: measurement, downlink synchronization, or uplink synchronization, wherein the first operation is used to obtain a Timing Advance (TA) of the first cell.

A terminal device provided in an embodiment of this application includes a processor and a memory, wherein the memory is configured to store a computer program, and the processor is configured to call and execute the computer program stored in the memory to perform any one of the methods described above.

A network device provided in an embodiment of this application includes: a processor and a memory, wherein the memory is configured to store a computer program, and the processor is configured to call and execute the computer program stored in the memory to perform any one of the methods described above.

A chip provided in an embodiment of this application includes a processor configured to call and execute the computer program in a memory, causing a device on which the chip is installed to perform any one of the methods described above.

A computer-readable storage medium provided in an embodiment of this application is used for storing a computer program, wherein the computer program is used to cause a computer to perform any one of the methods described above.

In the technical solution of the embodiments of this application, the network device performs a first operation on the first cell by instructing, configuring or activating the first signaling, and the terminal device performs the first operation on the first cell and obtains the TA of the first cell based on the first operation. In this way, the network device is able to manage the TA obtaining on the terminal device via the first signaling, thereby providing a guarantee for uplink synchronization before cell handover and reducing the interruption time of data transmission caused by cell handover.

## BRIEF DESCRIPTION OF THE DRAWINGS

The accompanying drawings, which are incorporated herein and constitute a part of this specification, illustrate embodiments in accordance with this application and, together with the description, serve to explain the principles of this application.

FIG. 1 is a schematic diagram of an application scenario according to an embodiment of this application;

FIG. 2-1 is a flow schematic diagram of a TA obtaining method 1;

FIG. 2-2 is a flow schematic diagram of a TA obtaining method 2;

FIG. 3 is a flow schematic diagram of a TA obtaining method provided in an embodiment of this application;

FIG. 4 is another flow schematic diagram of a TA obtaining method provided in an embodiment of this application;

FIG. 5 is yet another flow schematic diagram of a TA obtaining method provided in an embodiment of this application.

FIG. 6 is a schematic diagram of a communication system provided in an embodiment of this application;

FIG. 7-1 is a schematic diagram for calculating TA2 provided in an embodiment of this application;

FIG. 7-2 is another schematic diagram for calculating TA2 provided in an embodiment of this application;

FIG. 7-3 is yet another schematic diagram for calculating TA2 provided in an embodiment of this application;

FIG. 8 is a structural schematic diagram of a TA obtaining apparatus provided in an embodiment of this application;

FIG. 9 is another structural schematic diagram of a TA obtaining apparatus provided in an embodiment of this application;

FIG. 10 is a schematic structural diagram of a communication device provided in an embodiment of this application;

FIG. 11 is a schematic structural diagram of a chip according to an embodiment of this application.

## DETAILED DESCRIPTION

The technical solutions in the embodiments of this application will now be described with reference to the accompanying drawings. Obviously, the described embodiments are only some of the embodiments of this application, not all of them. Based on the embodiments of this application, all other embodiments obtained by those of ordinary skill in the art without making creative efforts fall within the scope of this application.

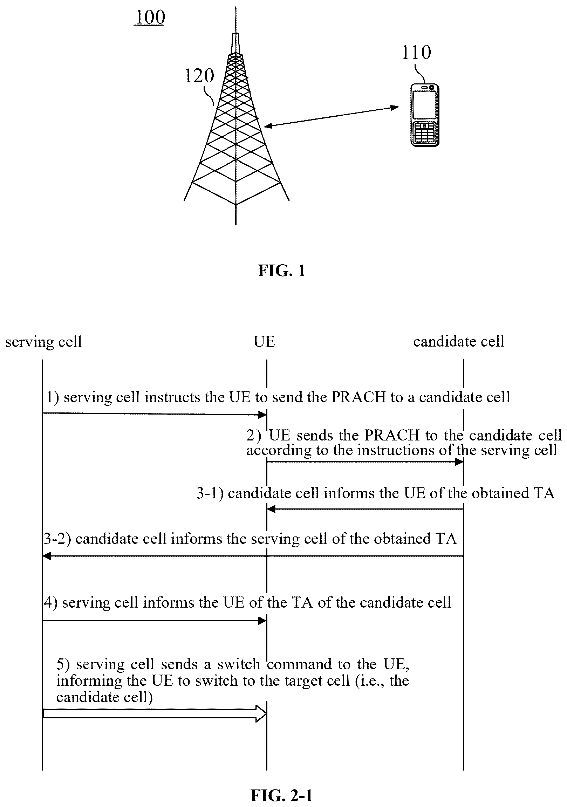

FIG. 1 is a schematic diagram of an application scenario according to an embodiment of this application.

As shown in FIG. 1, the communication system 100 may include a terminal device 110 and a network device 120. The network device 120 can communicate with the terminal device 110 via an air interface.

It should be understood that the communication system 100 is illustrated herein as an example in the embodiments of this application, but the embodiments of this application are not limited thereto. That is, the technical solutions in the embodiments of this application may be applied to various communication systems, such as a 5G communication system (also referred to as a New Radio (NR) communication system), or future communication systems, etc.

In the communication system 100 shown in FIG. 1, the network device 120 may be an access network device that communicates with the terminal device 110. The access network device may provide communication coverage for a specific geographical area and may communicate with the terminal device 110 (e.g., a User Equipment (UE)) located within the coverage area.

The network device 120 may be a base station (gNB) in an NR system, or a network device in a future evolved Public Land Mobile Network (PLMN), etc.

The terminal device 110 may be any terminal device, including but not limited to a terminal device that is connected to the network device 120 or other terminal devices via wired or wireless connections.

For example, the terminal device 110 may refer to an access terminal, UE, user unit, user station, mobile platform, mobile station, remote station, remote terminal, mobile device, user terminal, terminal, wireless communication device, user agent, or user apparatus. The access terminal may be a cellular phone, cordless phone, Session Initiation Protocol (SIP) phone, IoT device, satellite handheld terminal, Wireless Local Loop (WLL) station, Personal Digital Assistant (PDA), handheld device with wireless communication capability, computing device or other processing device connected to a wireless modem, in-vehicle device, wearable device, terminal device in a 5G network, or terminal device in a future evolved network, etc.

It should be noted that FIG. 1 is merely an example illustrating the system to which this application applies. Obviously, the method shown in the embodiments of this application may also be applied to other systems. Furthermore, the terms "system" and "network" are often used interchangeably in this document. The term "and/or" in this document merely describes the relationship between associated objects, indicating that there can be three relationships, for example, A and/or B can mean: A exists alone, A and B exist simultaneously, and B exists alone. Additionally, the symbol "/" generally indicates that the associated objects are in an "or" relationship. It should also be understood that "instruction" mentioned in the embodiments of this application may be a direct instruction, an indirect instruction, or may denote an associative relationship. For example, "A instructs B" may mean that A directly instructs B (e.g., B can be obtained through A); it may also mean that A indirectly instructs B (e.g., A instructs C, and B can be obtained through C); or it may mean that there is an associative relationship between A and B. It should also be understood that "correspondence" mentioned in the embodiments of this application may indicate a direct or indirect correspondence between two objects, or an associative relationship between two objects, or a relationship of instruction and being instructed, configuration and being configured, etc. It should also be understood that the "predefined" or "predefined rules" mentioned in the embodiments of this application can be implemented by prestoring corresponding codes, tables, or other means that can be used to indicate relevant information in the device (e.g., including terminal devices and network devices). This application does not limit the specific implementation method. For example, "predefined" may refer to what is defined in a protocol. It should also be understood that in the embodiments of this application, the "protocol" may refer to standard protocols in the field of communication, such as the NR protocol and related protocols applied to future communication systems. This application does not impose any limitations in this regard.

To facilitate understanding of the technical solutions in the embodiments of this application, the related art of the embodiments of this application are described below. The following related art are provided as optional solutions and may be arbitrarily combined with the technical solutions in the embodiments of this application, all of which fall within the protection scope of the embodiments of this application.

In a mobility enhancement project, mobility enhancement based on Layer 1/Layer 2 measurements has been introduced, aiming to reduce interruption time of data transmission caused by cell handover of terminal devices. By performing downlink synchronization and uplink synchronization with a target cell before handover, interruption time of data transmission can be effectively reduced. The realization of uplink synchronization depends on the obtaining of a TA (Timing Advance). For the TA obtaining, the related project has agreed to perform TA obtaining before cell handover. TA obtaining can include two methods: one is a Random Access Channel (RACH) method, which obtains the TA of the target cell based on Physical Random Access Channel (PRACH) transmission; the other is a RACH-less method, which obtains the TA of the target cell without PRACH transmission. These two methods are explained below.

TA obtaining method 1: the terminal device sends a PRACH to the target cell, allowing the target cell to measure the TA and send the measured TA to the terminal device.

TA obtaining method 2: the terminal device calculates the TA based on the time difference between two cells or the difference in arrival time of signals transmitted from the two cells.

For the above TA obtaining method 1, the terminal device sends a PRACH to the target cell. When the target cell receives the PRACH and measures the TA, it can directly inform the terminal device of the TA, or the serving cell can inform the terminal device of the TA. Thus, the terminal device is capable of obtaining the TA of the target cell.

As shown in FIG. 2-1, the specific process includes the following steps:

> 1) the serving cell instructs the UE to send the PRACH to a candidate cell;
> 2) The UE sends the PRACH to the candidate cell according to the instructions of the serving cell;
> 3-1) the candidate cell informs the UE of the obtained TA;
> 3-2) the candidate cell informs the serving cell of the obtained TA;
> 4) the serving cell informs the UE of the TA of the candidate cell;
> 5) the serving cell sends a switch command to the UE, informing the UE to switch to the target cell (i.e., the candidate cell).

Here, before the UE performs a cell switch, the serving cell can be aware that the UE has obtained the TA of the target cell, and thus can send the switch command to allow the UE to switch to the target cell.

For the above TA obtaining method 2, the TA is obtained through the terminal device itself. Therefore, the serving cell is unaware of whether the terminal device has obtained the TA of the target cell. Consequently, the serving cell also cannot determine whether it can send a switch command to the terminal device.

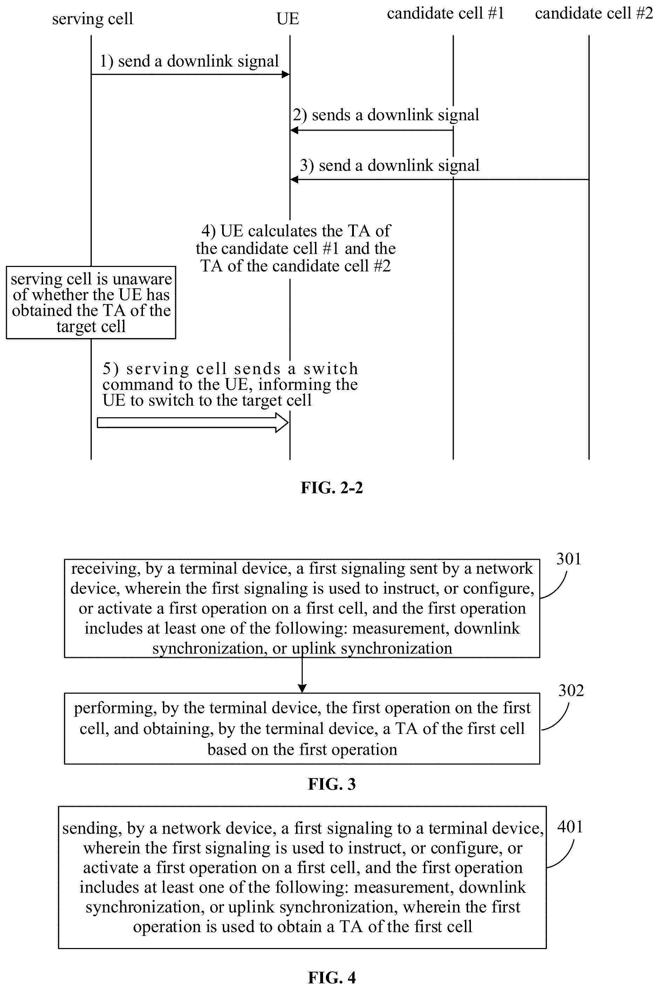

As shown in FIG. 2-2, the specific process includes the following steps:

> 1), 2), and 3) the serving cell sends a downlink signal, a candidate cell #1 sends a downlink signal, and a candidate cell #2 sends a downlink signal; the downlink signal may be a Synchronization Signal/PBCH Block (SSB) or other the downlink signals;
> 4) the UE calculates the TA of the candidate cell #1 based on the difference in the reception time of the downlink signals between the serving cell and the candidate cell #1, and the TA of the serving cell; the UE calculates the TA of the candidate cell #2 based on the difference in the reception time of the downlink signals between the serving cell and the candidate cell #2, and the TA of the serving cell;
> after step 4), the serving cell is unaware of whether the UE has obtained the TA of the target cell (such as the candidate cell #1 or the candidate cell #2);
> 5) the serving cell sends a switch command to the UE, informing the UE to switch to the target cell.

Through measuring the downlink signals from multiple cells, the UE can obtain the arrival time of the downlink signal for each cell, and thus obtain the time difference of the downlink signal reception between each candidate cell and the serving cell. The UE can use this time difference to calculate the TA to each candidate cell. However, the serving cell has no means of knowing when the UE completes the TA obtaining. As a result, the serving cell cannot determine when to send the switch command to the UE. In addition, in some scenarios, due to factors such as downlink timing errors between cells and the transition time between uplink and downlink in cell implementation, it is impossible to accurately obtain the TA of the candidate cell based solely on the time difference of the downlink signal reception from multiple cells.

Therefore, the following technical solutions are proposed according to the embodiments of this application.

To facilitate understanding of the technical solutions in the embodiments of this application, the technical solutions of this application are described in detail below through specific embodiments. The above-mentioned related art is provided as optional solutions and may be arbitrarily combined with the technical solutions in the embodiments of this application, all of which fall within the protection scope of the embodiments of this application. The embodiments of this application include at least part of the following contents.

It should be noted that the "network device" described in the embodiments of this application may be a base station or transmission node corresponding to the serving cell.

It should be noted that the "first cell" described in the embodiments of this application can be a "the candidate cell" or a "target cell".

It should be noted that the "second cell" described in the embodiments of this application may be a "reference cell", a "serving cell", a "target cell" or a "the candidate cell".

It should be noted that the "third cell" described in the embodiments of this application can be a "target cell" or a "switch target cell".

It should be noted that the first cell refers to the cell that needs to be measured, and the number of the cells to be measured may be one or more. The third cell refers to a target cell for cell switch or a switch target cell, which is a specifically designated cell and may be one of the measured cells.

It should be noted that the terms "instruct" and "configure" described in the embodiments of this application may be used interchangeably. For example, the description about that the first signaling is used to instruct a first operation on a first cell in the embodiments of this application may also be interpreted as that the first signaling is used to configure a first operation on a first cell.

FIG. 3 is a flow schematic diagram of a TA obtaining method provided in an embodiment of this application. As shown in FIG. 3, the TA obtaining method includes the following steps.

Step 301: receiving, by a terminal device, a first signaling sent by a network device, wherein the first signaling is used to instruct, or configure, or activate a first operation on a first cell, and the first operation includes at least one of the following: measurement, downlink synchronization, or uplink synchronization.

In the embodiment of this application, the terminal device receives a first signaling sent by the network device. In some embodiments, the first signaling is a Media Access Control Control Element (MAC CE). In other embodiments, the first signaling is a Radio Resource Control (RRC) signaling.

In the embodiment of this application, the first signaling is used to instruct, or configure, or activate a first operation on the first cell, and the first operation includes at least one of the following: measurement, downlink synchronization, or uplink synchronization. Here, uplink synchronization may refer to the obtaining of uplink timing or the obtaining of TA (Timing Advance).

It should be noted that the measurement specifically refers to the terminal device measuring or receiving the downlink signal of a cell. The downlink signal may be an SSB or another type of downlink signal.

It should be noted that downlink synchronization/uplink synchronization is achieved based on measurement. Downlink synchronization/uplink synchronization can be accomplished by measuring the downlink signal of the cell. Specifically, by measuring the downlink signal (such as an SSB) of the cell, downlink synchronization can be realized; by measuring the downlink signal (such as an SSB) of the cell, uplink timing or TA obtaining can be realized, thereby achieving uplink synchronization.

It should be noted that the number of first cells may be one or more. For example, when the number of first cells is three, the first signaling is used to instruct, or configure, or activate a first operation on cells 1, 2, and 3.

As an example, a base station configures one or more first cells, such as one or more candidate cells. The base station instructs, or configures, or activates a terminal device to perform a first operation on the first cell via a first signaling, wherein the first signaling includes one or more IDs of the first cell (such as the candidate cells) or configuration IDs of the first cell (such as the candidate cell configurations). The cell indicated by the ID is the cell that require measurement and/or downlink synchronization and/or uplink synchronization.

In some implementations, the first signaling includes uplink scheduling information or uplink grant (UL grant) information. The uplink resource transmission indicated by the uplink scheduling information or uplink grant information can be used by the terminal device to send information to the network device, such as the first information described below.

Step 302: performing, by the terminal device, the first operation on the first cell, and obtaining, by the terminal device, a Timing Advance (TA) of the first cell based on the first operation.

In the embodiments of this application, the terminal device performs a first operation on the first cell and obtains a TA of the first cell based on the first operation, which can be achieved by any one of the following solutions.

Solution 1

In some implementations, the terminal device determines a first time difference between the first cell and the second cell based on a first operation. Furthermore, the terminal device determines the TA of the first cell based on a TA of the second cell and the first time difference.

Here, the first time difference between the first cell and the second cell may be the downlink timing difference between the first cell and the second cell, or it may be the downlink reception timing difference (RX timing difference) between the first cell and the second cell.

As an example, if the TA of the second cell is TA1, the first time difference is offset, and the TA of the first cell is TA2, then: TA2 = TA1 + 2 * offset.

Solution 2

In some implementations, the first signaling includes a second time offset corresponding to the first cell. Based on this, the terminal device determines the TA of the first cell based on the TA of the second cell, the first time difference, and the second time offset.

In some implementations, the second time offset corresponding to the first cell includes at least one of the following:

a time offset corresponding to an uplink TA adjustment;
a time offset corresponding to a downlink timing error; or
a time offset corresponding to an uplink-downlink transition.

Here, the downlink timing error refers to the downlink timing error between the first cell and the second cell.

Here, the second time offset may include the adjustment value of the uplink TA (i.e., the time offset corresponding to the uplink TA adjustment) and/or the time offset caused by the downlink timing error (i.e., the time offset corresponding to the downlink timing error) and/or the time offset caused by the uplink-downlink transition (i.e., the time offset corresponding to the uplink-downlink transition).

Here, the second time offset can be used by the terminal device to correct the TA or to calculate the TA when performing TA calculation.

As an example, if the TA of the second cell is TA1, the first time difference is offset, the second time offset includes a time offset corresponding to the downlink timing error (Delta), and the TA of the first cell is TA2.

Then: TA2 = TA1 + 2*(offset + Delta).

As another example, if the TA of the second cell is TA1, the first time difference is offset, the second time offset includes a time offset corresponding to the uplink-downlink transition (X), and the TA of the first cell is TA2. Then: TA2 = TA1 + 2*offset - X.

As yet another example, if the TA of the second cell is TA1, the first time difference is offset, the second time offset includes both a time offset corresponding to the downlink timing error (Delta) and a time offset corresponding to the uplink-downlink transition (X), and the TA of the first cell is TA2. Then: TA2 = TA1 + 2*(offset + Delta) - X.

In some implementations, the determination/confirmation/recognition that "the terminal device is capable of obtaining the TA of the first cell" can be achieved through the following solutions.

Solution A

Method 1) after receiving the first signaling, the terminal device is capable of obtaining the TA of the first cell.

Here, the first signaling may be an RRC signaling. The network device and/or terminal device determines/confirms/recognizes/identifies that, after receiving the first signaling, the terminal device is capable of obtaining the TA of the first cell.

Method 2) after a first time has elapsed following the receipt of the first signaling, the terminal device is capable of obtaining the TA of the first cell.

Here, the first signaling may be a RRC signaling. The network device and/or terminal device determines/confirms/recognizes/identifies that, after the first time has elapsed following the receipt of the first signaling, the terminal device is capable of obtaining the TA of the first cell.

Method 3) after a second time has elapsed following the sending of an acknowledgment message corresponding to the first signaling, the terminal device is capable of obtaining the TA of the first cell.

Here, the first signaling may be a MAC CE, and the acknowledgment message corresponding to the first signaling may be HARQ-ACK information. The network device and/or the terminal device determines/confirms/recognizes/identifies that, after the second time has elapsed following the sending of the acknowledgment message corresponding to the first signaling, the terminal device is capable of obtaining the TA of the first cell.

Solution B

In some implementations, after the terminal device obtains the TA of the first cell, it sends first information or a second signaling to the network device. The first information or the second signaling is used to indicate that the terminal device has obtained the TA of the first cell.

Here, the first information or the second signaling may instruct that the terminal device has obtained part or all of the TA of the first cell.

As an example, the network device instructs, or configures, or activates a first operation on cell 1, cell 2, and cell 3 via a first signaling. The terminal device performs the first operation on cell 1, cell 2, and cell 3, obtains the TA of cell 1 and cell 2, and indicates to the network device, via the first information or second signaling, that it has obtained the TA of cell 1 and cell 2.

As another example, the network device instructs, or configures, or activates a first operation on cell 1, cell 2, and cell 3 via a first signaling. The terminal device performs the first operation on cell 1, cell 2, and cell 3, obtains the TA of cell 1, cell 2, and cell 3, and indicates to the network device, via the first information or second signaling, that it has acquired the TA of cell 1, cell 2, and cell 3.

The specific implementation solutions of the above-mentioned first information or second signaling are described below.

Implementation Solution 1)

In some implementations, the first information includes at least one of the following: a first time difference between the first cell and a second cell, the TA of the first cell, an identifier of the first cell, or first indication information, wherein the first indication information is used to instruct that the terminal device has obtained the TA of the first cell. Here, the first cell may be one or more candidate cells or target cells.

Here, the first signaling may include information such as the IDs of the cells for which the terminal device has obtained TA, up to the uplink transmission scheduled by the first signaling. The first signaling may only include the cell IDs, to indicate the cells for which TA obtaining has been completed. Alternatively, the first signaling may further include the cell IDs along with the corresponding TAs, and/or downlink timing differences, and/or downlink reception timing difference, etc. The first signaling may further include indication information to indicate that the terminal has obtained the TAs of all cells indicated by the first signaling. The first signaling may further include indication information to instruct that the terminal has obtained the TAs of one or more cells indicated by the first signaling.

Furthermore, in some embodiments, the first information is transmitted by a first uplink resource; the first uplink resource is indicated by uplink scheduling information included in the first signaling; or, the first uplink resource is obtained through a Scheduling Request (SR) from the terminal device.

Here, uplink scheduling information may also be replaced with uplink grant (UL grant) information.

Here, after performing the first operation, the terminal device uses the first uplink resource scheduled by the first signaling to transmit the first information; or, after performing the first operation, the terminal device initiates a scheduling request for uplink transmission and uses the obtained first uplink resource to transmit the first information.

Implementation Solution 2)

In some implementations, the second signaling is a specific SR, and the specific SR is used to instruct that the terminal device has obtained the TA of the first cell.

Here, the SR can be configured based on an RRC signaling.

Implementation Solution

3) In some implementations, the first information is reporting information of the first cell, and the reporting information of the first cell is used to instruct that the terminal device has obtained the TA of the first cell.

Here, a reporting mechanism of the reporting information is periodic reporting, or semi-persistent reporting, or aperiodic reporting.

Furthermore, in some embodiments, the reporting information is transmitted by a second uplink resource; the second uplink resource is indicated by uplink grant information included in the first signaling.

Here, the reporting information can be Channel State Information (CSI) reporting information. The CSI reporting information may include at least one of the following: Reference Signal Receiving Power (RSRP), Channel Quality Indication (CQI), CSI-RS Resource Indication (CRI), SSB index, Signal to Interference plus Noise Ratio (SINR), etc. More specifically, it may include at least one of the following: cri-RI-PMI-CQI, cri-RI-i1, cri-RI-i1-CQI, cri-RI-CQI, cri-RSRP, cri-SINR, ssb-Index-RSRP, ssb-Index-SINR, cri-RI-LI-PMI-CQI, cri-RSRP-Index, ssb-Index-RSRP-Index, cri-SINR-Index, or ssb-Index-SINR-Index.

In some implementations, after the terminal device obtains the TA of the first cell, the method further includes: receiving, by the terminal device, a switch command sent by the network device, wherein the switch command is used to instruct the terminal device to switch to a third cell; wherein the switch command includes at least one of the following: an identifier of the third cell, or a TA of the third cell.

In some implementations, the third cell may be a cell other than the first cell.

In other implementations, the third cell may be a cell within the range of the first cell, that is, the third cell may be one of the first cells (where the first cell may include multiple cells).

Here, the third cell refers to the target cell of the cell switch or the switch target cell, which is a specifically designated cell. The third cell can be one of the cells in which the first operation is performed.

Here, the switch command can be a switch indication for the third cell or an indication of the cell switch.

In some implementations, when the switch command includes the TA of the third cell, the terminal device uses the TA of the third cell included in the switch command to perform uplink transmission to the third cell; and/or when the switch command does not include the TA of the third cell, the terminal device uses a calculated TA of the third cell to perform uplink transmission to the third cell. Here, the calculated TA of the third cell may also be a TA obtained based on measurements performed by the terminal device.

FIG. 4 is another flow schematic diagram of a TA obtaining method provided in an embodiment of this application. As shown in FIG. 4, the TA obtaining method includes the following steps.

Step 401: sending, by a network device, a first signaling to a terminal device, wherein the first signaling is used to instruct, or configure, or activate a first operation on a first cell, and the first operation includes at least one of the following: measurement, downlink synchronization, or uplink synchronization, wherein the first operation is used to obtain a Timing Advance (TA) of the first cell.

In the embodiments of this application, the network device sends a first signaling to the terminal device. In some embodiments, the first signaling is a MAC CE. In other embodiments, the first signaling is an RRC signaling.

In the embodiments of this application, the first signaling is used to instruct, or configure, or activate a first operation on the first cell, and the first operation includes at least one of the following: measurement, downlink synchronization, or uplink synchronization. Here, uplink synchronization may refer to the obtaining of uplink timing or the obtaining of TA (Timing Advance).

It should be noted that the measurement specifically refers to the terminal device measuring or receiving the downlink signal of a cell. The downlink signal may be an SSB or another type of downlink signal.

It should be noted that downlink synchronization/uplink synchronization is achieved based on measurement. Downlink synchronization/uplink synchronization can be accomplished by measuring the downlink signal of the cell. Specifically, downlink synchronization can be realized by measuring the downlink signal (such as an SSB) of the cell; uplink timing or TA obtaining can be realized by measuring the downlink signal (such as an SSB) of the cell, thereby achieving uplink synchronization.

It should be noted that the number of first cells may be one or more. For example, when the number of first cells is three, the first signaling is used to instruct, or configure, or activate a first operation on cells 1, 2, and 3.

In some implementations, the first signaling includes a second time offset corresponding to the first cell. The second time offset is used by the terminal device to obtain the TA of the first cell, and the specific obtaining method can be referred to the solution related to FIG. 3 described above.

In some implementations, the second time offset corresponding to the first cell includes at least one of the following:

a time offset corresponding to an uplink TA adjustment;
a time offset corresponding to a downlink timing error; or
a time offset corresponding to an uplink-downlink transition.

Here, the second time offset may include the adjustment value of the uplink TA (i.e., the time offset corresponding to the uplink TA adjustment) and/or the time offset caused by the downlink timing error (i.e., the time offset corresponding to the downlink timing error) and/or the time offset caused by the uplink-downlink transition (i.e., the time offset corresponding to the uplink-downlink transition).

Here, downlink timing error refers to the downlink timing error between the first cell and the second cell.

In some implementations, the determination/confirmation/recognition that "the terminal device is capable of obtaining the TA of the first cell" can be achieved through the following solutions:

Solution A

Method 1)

After sending the first signaling, the terminal device is capable of obtaining the TA of the first cell.

Here, the first signaling may be an RRC signaling. The network device determines/confirms/recognizes/identifies that, after sending the first signaling, the terminal device is capable of obtaining the TA of the first cell.

Method 2)

After a first time period has elapsed following sending of the first signaling, the terminal device is capable of obtaining the TA of the first cell.

Here, the first signaling may be an RRC signaling. The network device determines/confirms/recognizes/identifies that, after the first time has elapsed following the sending of the first signaling, the terminal device is capable of obtaining the TA of the first cell.

Method 3)

After a second time period has elapsed following receipt of an acknowledgment message corresponding to the first signaling, the terminal device is capable of obtaining the TA of the first cell.

Here, the first signaling may be a MAC CE, and the acknowledgment message corresponding to the first signaling may be HARQ-ACK information. The network device determines/confirms/recognizes/identifies that, after the second time has elapsed following receipt of the acknowledgment message corresponding to the first signaling, the terminal device is capable of obtaining the TA of the first cell.

For the above solution A, there is no need for the terminal device to provide feedback to the network device. The network device assumes that the terminal device can calculate or obtain the TA of the first cell through the first operation. Alternatively, the network device assumes that the error in the TA of the first cell by the terminal device can be adjusted in subsequent uplink transmissions, or that the error does not affect the uplink transmission quality. After confirming that the terminal device is capable of obtaining the TA of the first cell, the network device can send a switch command to the terminal device.

Solution B

In some implementations, the network device receives first information or a second signaling sent by the terminal device. The first information or second signaling is used to instruct that the terminal device has obtained the TA of the first cell.

Here, the first information or the second signaling may instruct that the terminal device has obtained part or all of the TAs of the first cell.

As an example, the network device performs a first operation on cell 1, cell 2, and cell 3 by instructing, or configuring, or activating a first signaling. The terminal device performs the first operation on cell 1, cell 2, and cell 3, obtains the TA of cell 1 and cell 2, and indicates to the network device, via the first information or second signaling, that it has obtained the TA of cell 1 and cell 2.

As another example, the network device performs a first operation on cell 1, cell 2, and cell 3 by instructing, or configuring, or activating a first signaling. The terminal device performs the first operation on cell 1, cell 2, and cell 3, obtains the TA of cell 1, cell 2, and cell 3, and indicates to the network device, via the first information or second signaling, that it has obtained the TA of cell 1, cell 2, and cell 3.

The specific implementation solutions of the above-mentioned first information or second signaling are described below.

Implementation Solution 1)

In some implementations, the first information includes at least one of the following: a first time difference between the first cell and a second cell, the TA of the first cell, an identifier of the first cell, or first indication information, wherein the first indication information is used to instruct that the terminal device has obtained the TA of the first cell. Here, the first cell may be one or more candidate cells or target cells.

Furthermore, in some embodiments, the first information is transmitted by a first uplink resource; the first uplink resource is indicated by uplink scheduling information included in the first signaling; or, the first uplink resource is obtained through a Scheduling Request (SR) from the terminal device.

Here, the uplink scheduling information may also be replaced with uplink grant (UL grant) information.

Implementation Solution 2)

In some implementations, the second signaling is a specific SR, and the specific SR is used to instruct that the terminal device has obtained the TA of the first cell.

Implementation Solution 3)

In some implementations, the first information is reporting information of the first cell, and the reporting information of the first cell is used to instruct that the terminal device has obtained the TA of the first cell.

Here, a reporting mechanism of the reporting information is periodic reporting, or semi-persistent reporting, or aperiodic reporting.

Furthermore, in some embodiments, the reporting information is transmitted by a second uplink resource; the second uplink resource is indicated by uplink grant information included in the first signaling.

Here, the reporting information can be CSI reporting information. The CSI reporting information may include at least one of the following: RSRP, CQI, CRI, SSB index, SINR, etc. More specifically, it may include at least one of the following: cri-RI-PMI-CQI, cri-RI-i1, cri-RI-i1-CQI, cri-RI- CQI, cri-RSRP, cri-SINR, ssb-Index-RSRP, ssb-Index-SINR, cri-RI-LI-PMI-CQI, cri-RSRP-Index, ssb-Index-RSRP-Index, cri-SINR-Index, or ssb-Index-SINR-Index.

In some implementations, after the network device determines/confirms/recognizes/ identifies, through the above solution A or solution B, that the terminal device has obtained the TA of the first cell, the method further includes: the network device sending a switch command to the terminal device, wherein the switch command is used to instruct the terminal device to switch to a third cell; wherein the switch command includes at least one of the following: an identifier of the third cell, or a TA of the third cell.

Here, the third cell refers to the target cell of the cell switch or the switch target cell, which is a specifically designated cell. The third cell can be one of the cells in which the first operation is performed.

Here, the switch command can be a switch indication for the third cell or an indication of the cell switch.

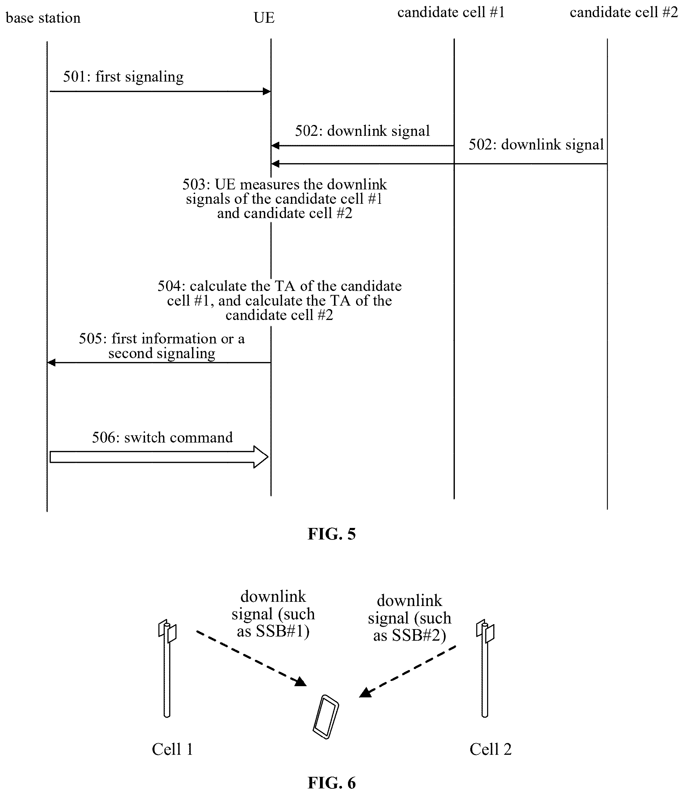

FIG. 5 is yet another flow schematic diagram of a TA obtaining method provided in an embodiment of this application. The base station refers to the base station corresponding to the serving cell, the terminal device is a UE, the first cell includes a candidate cell #1 and a candidate cell #2 (i.e., the number of first cells is 2), the second cell is the serving cell, and the third cell is the candidate cell #1. As shown in FIG. 5, the TA obtaining method includes the following steps.

Step 501: the base station sends a first signaling to the UE, wherein the first signaling is used to instruct, or configure or activate measurement and/or downlink synchronization and/or uplink synchronization for the candidate cell #1 and the candidate cell #2.

Step 502: the candidate cell #1 sends a downlink signal, and the candidate cell #2 sends a downlink signal. The downlink signal may be an SSB or other type of signal.

Step 503: the UE measures the downlink signals of the candidate cell #1 and candidate cell #2.

Step 504: the UE calculates the TA of the candidate cell #1 based on the difference in the reception times of the downlink signals (i.e., downlink reception timing difference) between the candidate cell #1 and serving cell, as well as the TA of serving cell and the second time offset (optional); the UE calculates the TA of the candidate cell #2 based on the difference in the reception times of the downlink signals (i.e., downlink reception timing difference) between the candidate cell #2 and serving cell, as well as the TA of serving cell and the second time offset (optional).

Step 505: the UE sends first information or a second signaling to the base station, wherein the first information or the second signaling is used to instruct that the terminal device has obtained the TA of the candidate cell #1 and the candidate cell #2.

Here, the specific implementation of the first information or the second signaling may refer to the solutions related to FIGS. 3 and 4 described above.

Step 506: the base station sends a switch command to the UE.

Here, the switch command may be a switch command to the candidate cell #1 (i.e., the target cell) or a cell switch command.

Here, the switch command may include the ID and TA of the candidate cell #1. In this case, the UE uses the TA included in the switch command to perform uplink transmission to the candidate cell #1.

Here, the switch command may only include the ID of the candidate cell #1. In this case, the UE uses the calculated TA of the candidate cell #1 (or the measured TA of the candidate cell #1) to perform uplink transmission to the candidate cell #1.

The following describes how to calculate the TA of the cell with specific application examples. In the following examples, the description is based on the UE calculating the TA of the cell using the downlink reception timing difference, but this application is not limited thereto. The UE may also calculate the TA of the cell based on the downlink timing difference. As shown in FIG. 6, cell 1 and cell 2 may be a transmission node 1 (or a base station 1) and a transmission node 2 (or a base station 2). The cell 1 sends a downlink signal (such as SSB#1) to the UE, and the cell 2 sends a downlink signal (such as SSB#2) to the UE.

Application Example 1

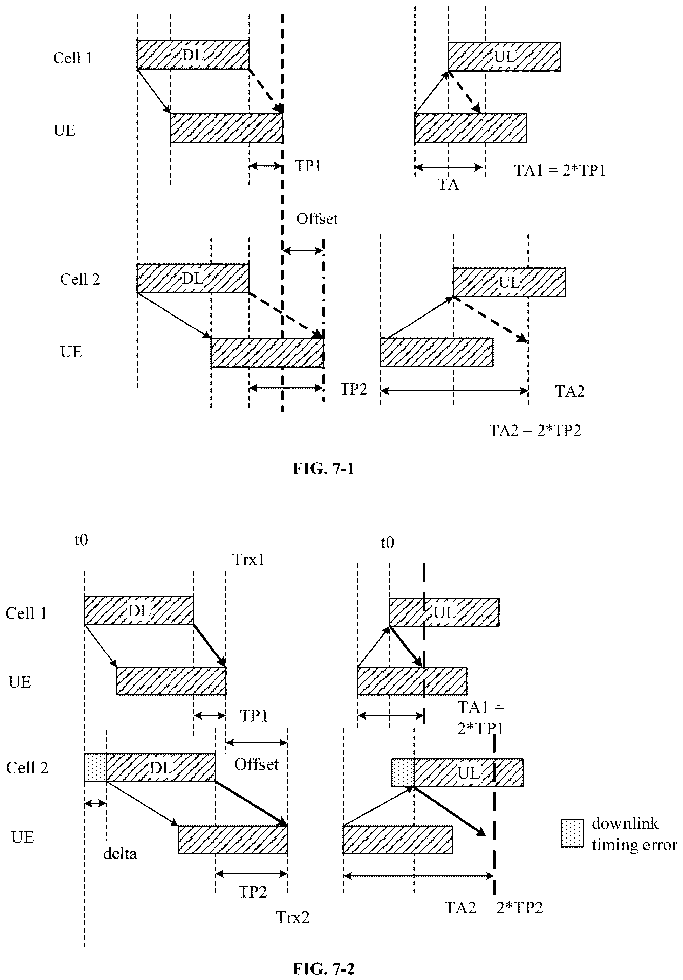

Referring to FIG. 7-1, which illustrates the calculation of the TA2, the details are as follows.

1) Determination of TA

In the case of a single cell, Timing Advance (TA) is twice the propagation delay. Therefore, the TAs for cell 1 and cell 2 satisfy the following formula:

$$TA1 = 2*TP1;$$

$$TA2 = 2*TP2;$$

where TA1 is the TA of cell 1, and TA2 is the TA of cell 2.

2) Determination of downlink reception timing difference

Offset is the downlink reception timing difference, that is, the time difference between the downlink signals received by the UE from a node 1 and a node 2. The offset satisfies the following formula:

$$Offset = TP2 - TP1.$$

3) The UE can calculate the TA2 of cell 2 based on the TA1 and the offset. The TA2 satisfies the following formula:

$$TA2 = TA1 + 2 * offset.$$

Application Example 2

Referring to FIG. 7-2, which illustrates the calculation of the TA2, the details are as follows.

1) Determination of TA

In the case of a single cell, the Timing Advance (TA) is twice the propagation delay. Therefore, the TA for cell 1 and cell 2 satisfy the following formula:

$$TA1 = 2*TP1;$$

$$TA2 = 2*TP2;$$

where TA1 is the TA of cell 1, and TA2 is the TA of cell 2.

2) Determination of downlink reception timing difference

There is a downlink timing error between cells, denoted as delta (i.e., downlink timing error). In this case, the downlink reception timing difference Offset satisfies the following formula:

$$\text{offset} = \text{TP2} - \text{TP1} + \text{Delta};$$

where Delta may be obtained through inter-cell interaction or from information reported by other terminals.

3) The UE can calculate the TA2 of cell 2 based on the TA1 and the offset. The TA2 satisfies the following formula:

$$\text{TA2} = \text{TA1} + 2*(\text{offset} + \text{Delta}).$$

Application Example 3

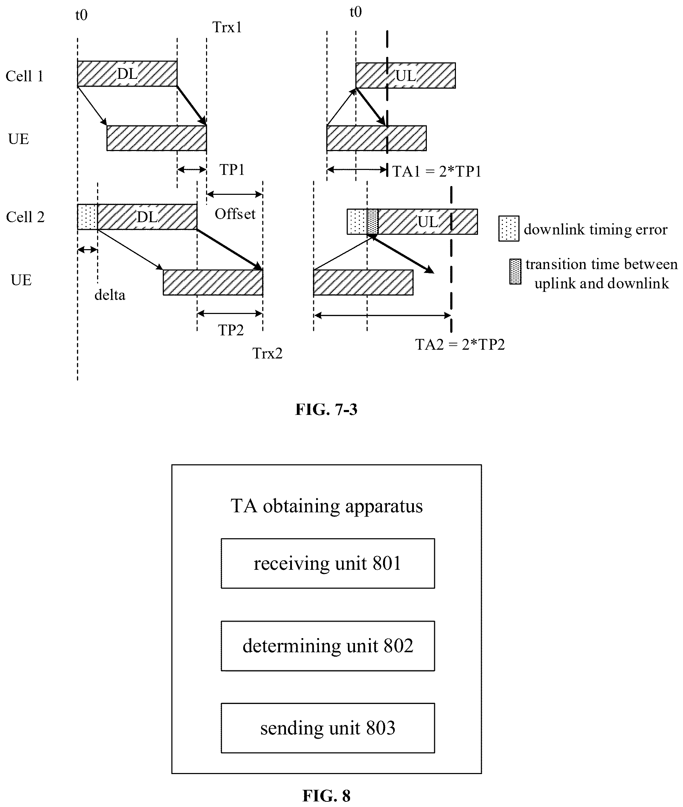

Referring to FIG. 7-3, which illustrates the calculation of the TA2, the details are as follows.

1) Determination of TA

In the case of a single cell, the Timing Advance (TA) is twice the propagation delay. Therefore, the TA for cell 1 and cell 2 satisfy the following formula:

$$\text{TA1} = 2*\text{TP1};$$

$$\text{TA2} = 2*\text{TP2};$$

where TA1 is the TA of cell 1, and TA2 is the TA of cell 2.

2) Determination of downlink reception timing difference

There is a downlink timing error between cells, denoted as delta (i.e., downlink timing error). In this case, the downlink reception timing difference Offset satisfies the following formula:

$$\text{offset} = \text{TP2} - \text{TP1} + \text{Delta};$$

where Delta may be obtained through inter-cell interaction or from information reported by another terminal.

3) Determination of the TA2 for cell 2

There is a transition time (gap) X between downlink and uplink transmission for cell 2. In this case, the UE can calculate the TA2 of cell 2 based on the TA1, the offset, and X. The TA2 satisfies the following formula:

$$\text{TA2} = \text{TA1} + 2*(\text{offset} + \text{Delta}) - X.$$

Here, the uplink-downlink transition time is an implementation parameter of the base station, which can be further indicated to UE by the base station.

According to the technical solutions of the embodiments of this application: 1) Based on downlink measurements performed by the UE, uplink TA estimation can be achieved, which avoids the scheduling and TA indication delays introduced by the RACH triggered by a PDCCH order. The UE can calculate the TA to the target cell based on its own measurements and the available TA information of the current serving cell, thereby reducing latency and improving the flexibility of the UE. 2) By reusing the indication for downlink measurements, the range of cells for which the UE performs downlink synchronization and TA calculation can be narrowed. At the same time, reusing this indication for downlink measurement or synchronization can better support the solution, which is based on the reception time differences from multiple candidate cells, and thus reduce both signaling and the computational load on the UE. 3) By introducing an indication of the TA to be used in a cell switch or an indication related to the candidate cells, the UE can be instructed which uplink TA is needed to be used. This not only ensures that the UE can obtain a more accurate TA or timing information, but also informs the UE which calculated TA value to use for uplink transmission in a low-overhead manner.

FIG. 8 is a structural schematic diagram of a TA obtaining apparatus provided in an embodiment of this application, applied to a terminal device. As shown in FIG. 8, the TA obtaining apparatus includes:

a receiving unit 801, configured to receive a first signaling sent by a network device, wherein the first signaling is used to instruct, or configure, or activate a first operation on a first cell, and the first operation includes at least one of the following: measurement, downlink synchronization, or uplink synchronization; a determining unit 802, configured to perform the first operation on the first cell, and obtain a Timing Advance (TA) of the first cell based on the first operation.

In some implementations, the determining unit 802 is configured to determine a first time difference between the first cell and a second cell based on the first operation, and determine the TA of the first cell based on a TA of the second cell and the first time difference.

In some implementations, the first signaling includes a second time offset corresponding to the first cell.

In some implementations, the determining unit 802 is configured to determine the TA of the first cell based on a TA of the second cell, the first time difference, and a second time offset.

In some implementations, the second time offset includes at least one of the following:

a time offset corresponding to an uplink TA adjustment;
a time offset corresponding to a downlink timing error; or
a time offset corresponding to an uplink-downlink transition.

In some implementations, after receiving the first signaling, the terminal device is capable of obtaining the TA of the first cell; and/or after a first time period has elapsed following receipt of the first signaling, the terminal device is capable of obtaining the TA of the first cell; and/or after a second time period has elapsed following sending of an acknowledgment message corresponding to the first signaling, the terminal device is capable of obtaining the TA of the first cell.

In some implementations, the apparatus further includes: a sending unit 803 configured to send first information or a second signaling to the network device.

In some implementations, the first information or the second signaling is used to instruct that the terminal device has obtained the TA of the first cell.

In some implementations, the first information includes at least one of the following: a first time difference between the first cell and a second cell, the TA of the first cell, an identifier of the first cell, or first indication information, wherein the first indication information is used to instruct that the terminal device has obtained the TA of the first cell.

In some implementations, the first information is transmitted by a first uplink resource;

the first uplink resource is indicated by uplink scheduling information included in the first signaling; or
the first uplink resource is obtained through a Scheduling Request (SR) of the terminal device.

In some implementations, the second signaling is a specific SR, and the specific SR is used to instruct that the terminal device has obtained the TA of the first cell.

In some implementations, the first information is reporting information of the first cell, and the reporting information of the first cell is used to instruct that the terminal device has obtained the TA of the first cell.

In some implementations, a reporting mechanism of the reporting information is periodic reporting, or semi-persistent reporting, or aperiodic reporting.

In some implementations, the reporting information is transmitted by a second uplink resource; the second uplink resource is indicated by uplink grant information included in the first signaling.

In some embodiments, the receiving unit 801 is configured to receive a switch command sent by the network device, wherein the switch command is used to instruct the terminal device to switch to a third cell; wherein the switch command includes at least one of the following: an identifier of the third cell, or a TA of the third cell.

In some implementations, when the switch command includes the TA of the third cell, the sending unit 803 uses the TA of the third cell included in the switch command to perform uplink transmission to the third cell; and/or when the switch command does not include the TA of the third cell, the sending unit 803 uses a calculated TA of the third cell to perform uplink transmission to the third cell.

In some implementations, the first signaling is a Medium Access Control Control Element (MAC CE) or a Radio Resource Control (RRC) signaling.

Those skilled in the art should understand that the implementation functions of each unit in the TA obtaining apparatus shown in FIG. 8 can be understood with reference to the relevant description of the aforementioned method. The functions of each unit in the TA obtaining apparatus shown in FIG. 8 can be implemented by a program executed by a processor, or by specific logic circuits.

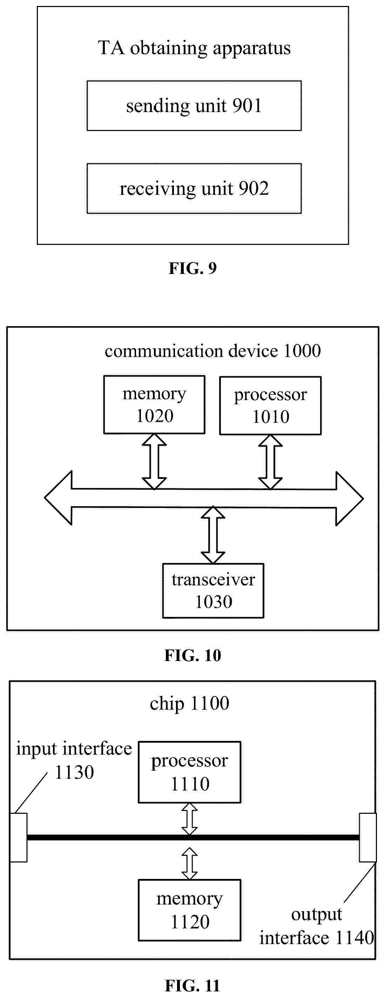

FIG. 9 is another structural schematic diagram of a TA obtaining apparatus provided in an embodiment of this application, which is applied to a network device. As shown in FIG. 9, the TA obtaining apparatus includes: a sending unit 901, configured to send a first signaling to a terminal device, wherein the first signaling is used to instruct, or configure, or activate a first operation on a first cell, and the first operation includes at least one of the following: measurement, downlink synchronization, or uplink synchronization, wherein the first operation is used to obtain a Timing Advance (TA) of the first cell.

In some implementations, the first signaling includes a second time offset corresponding to the first cell.

In some implementations, the second time offset includes at least one of the following:

a time offset corresponding to an uplink TA adjustment;
a time offset corresponding to a downlink timing error; or
a time offset corresponding to an uplink-downlink transition.

In some implementations, after sending the first signaling, the terminal device is capable of obtaining the TA of the first cell; and/or

after a first time period has elapsed following sending of the first signaling, the terminal device is capable of obtaining the TA of the first cell; and/or
after a second time period has elapsed following receipt of an acknowledgment message corresponding to the first signaling, the terminal device is capable of obtaining the TA of the first cell.

In some embodiments, the apparatus further includes a receiving unit 902 configured to receive first information or second signaling sent by the terminal device.

In some implementations, the first information or the second signaling is used to instruct that the terminal device has obtained the TA of the first cell.

In some implementations, the first information includes at least one of the following: a first time difference between the first cell and a second cell, the TA of the first cell, an identifier of the first cell, or first indication information, wherein the first indication information is used to instruct that the terminal device has obtained the TA of the first cell.

In some implementations, the first information is transmitted by a first uplink resource;

the first uplink resource is indicated by uplink scheduling information included in the first signaling; or the first uplink resource is obtained through a Scheduling Request (SR) of the terminal device.

In some implementations, the second signaling is a specific SR, and the specific SR is used to instruct that the terminal device has obtained the TA of the first cell.

In some implementations, the first information is reporting information of the first cell, and the reporting information of the first cell is used to instruct that the terminal device has obtained the TA of the first cell.

In some implementations, a reporting mechanism of the reporting information is periodic reporting, or semi-persistent reporting, or aperiodic reporting.

In some implementations, the reporting information is transmitted by a second uplink resource; the second uplink resource is indicated by uplink grant information included in the first signaling.

In some embodiments, the sending unit 901 is configured to send a switch command to the terminal device, wherein the switch command is used to instruct the terminal device to switch to a third cell; wherein the switch command includes at least one of the following: an identifier of the third cell, or a TA of the third cell.

In some implementations, the first signaling is a Medium Access Control Control Element (MAC CE) or a Radio Resource Control (RRC) signaling.

Those skilled in the art should understand that the implementation functions of each unit in the TA obtaining apparatus shown in FIG. 9 can be understood with reference to the relevant description of the aforementioned methods. The functions of each unit in the TA obtaining apparatus shown in FIG. 9 can be implemented by a program executed by a processor, or by specific logic circuits.

FIG. 10 is a schematic structural diagram of a communication device 1000 provided in an embodiment of this application. The communication device may be a terminal device or a network device. The communication device 1000 shown in FIG. 10 includes a processor 1010. The processor 1010 can call and execute a computer program in a memory to implement the methods in the embodiments of this application.

Optionally, as shown in FIG. 10, the communication device 1000 may further include a memory 1020. The processor 1010 can call and execute the computer program in the memory 1020 to implement the methods in the embodiments of this application

The memory 1020 may be a separate device independent of the processor 1010, or may be integrated into the processor 1010.

Optionally, as shown in FIG. 10, the communication device 1000 may further include a transceiver 1030. The processor 1010 can control the transceiver 1030 to communicate with other devices. Specifically, it may send information or data to another device, or receive information or data sent by another device.

The transceiver 1030 may include a transmitter and a receiver. The transceiver 1030 may further include one or more antennas.

Optionally, the communication device 1000 may specifically be a network device in the embodiments of this application, and the communication device 1000 may implement the corresponding processes implemented by the network device in the various methods of the embodiments of this application. For the sake of brevity, it will not be described in detail here.

Optionally, the communication device 1000 may specifically be a mobile terminal/terminal device in the embodiments of this application, and the communication device 1000 may implement the corresponding processes implemented by the mobile terminal/terminal device in the various methods of the embodiments of this application. For the sake of brevity, it will not be described in detail here.

FIG. 11 is a schematic structural diagram of a chip according to an embodiment of this application. The chip 1100 shown in FIG. 11 includes a processor 1110. The processor 1110 can call and execute a computer program in a memory to implement the methods in the embodiments of this application.

Optionally, as shown in FIG. 11, the chip 1100 may further include a memory 1120. The processor 1110 can call and execute the computer program in the memory 1120 to implement the methods in the embodiments of this application.

The memory 1120 may be a separate device independent of the processor 1110, or may be integrated into the processor 1110.

Optionally, the chip 1100 may further include an input interface 1130. The processor 1110 can control the input interface 1130 to communicate with other devices or chips, specifically, to obtain information or data sent by other devices or chips.

Optionally, the chip 1100 may further include an output interface 1140. The processor 1110 can control the output interface 1140 to communicate with another device or chip, specifically, to output information or data to the other device or chip.

Optionally, the chip may be applied to the network device in the embodiments of this application, and the chip may implement the corresponding processes implemented by the network device in the various methods of the embodiments of this application. For the sake of brevity, it will not be described in detail here.

Optionally, the chip may be applied to the mobile terminal/terminal device in the embodiments of this application, and the chip may implement the corresponding processes implemented by the mobile terminal/terminal device in the various methods of the embodiments of this application. For the sake of brevity, it will not be described in detail here.

It should be understood that the chip mentioned in the embodiments of this application may also be referred to as a system-on-a-chip, system chip, chip system, or system-on-a-chip, etc.

It should be understood that the processor in the embodiments of this application may be an integrated circuit chip with signal processing capability. In implementation, the steps of the above method embodiments can be completed by an integrated logic circuit of hardware in the processor or by instructions in the form of software. The processor described above may be a general-purpose processor, a Digital Signal Processor (DSP), an Application-Specific Integrated Circuit (ASIC), a Field-Programmable Gate Array (FPGA), or other programmable logic devices, discrete gate or transistor logic devices, or discrete hardware components. The processor may implement or execute the methods, steps, and logic block diagrams disclosed in the embodiments of this application. The general-purpose processor may be a microprocessor or any conventional processor and the like. The steps of the methods disclosed in the embodiments of this application may be directly performed by a hardware decoding processor, or by a combination of hardware and software modules in the decoding processor. The software modules may be located in random access memory, flash memory, read-only memory, programmable read-only memory, electrically erasable programmable memory, register, or other mature storage medium in the art. The storage medium is located in the memory, and the processor reads information in the memory and, in conjunction with its hardware, implements the steps of the above methods.

It should be understood that the memory in the embodiments of this application can be volatile memory or non-volatile memory, or may include both volatile and non-volatile memories. The non-volatile memory may be Read-Only Memory (ROM), Programmable Read-Only Memory (PROM), Erasable Programmable Read-Only Memory (EPROM), Electrically Erasable Programmable Read-Only Memory (EEPROM), or flash memory. The volatile memory may be Random Access Memory (RAM), which is used as an external high-speed cache. By way of example and not limitation, many forms of RAM are available, such as Static Random Access Memory (SRAM), Dynamic Random Access Memory (DRAM), Synchronous DRAM (SDRAM), Double Data Rate SDRAM (DDR SDRAM), Enhanced Synchronous DRAM (ESDRAM), Synchlink DRAM (SLDRAM), and Direct Rambus RAM (DR RAM). It should be noted that the memory used in the systems and methods described herein is intended to include, but is not limited to, these and any other suitable types of memory.

It should be understood that the above-described memory is exemplary but not limiting. For example, the memory in the embodiments of this application may also be Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Synchronous Link Dynamic Random Access Memory (SLDRAM), and Direct Rambus RAM (DR RAM), etc. That is, the memory in the embodiments of this application is intended to include, but is not limited to, these and any other suitable types of memory.

An embodiment of this application further provides a computer-readable storage medium for storing computer programs.

Optionally, the computer-readable storage medium may be applied to the network device in the embodiments of this application, and the computer program causes the computer to execute the corresponding processes implemented by the network device in the various methods of the embodiments of this application. For the sake of brevity, it will not be described in detail here.

Optionally, the computer-readable storage medium may be applied to the mobile terminal/terminal device in the embodiments of this application, and the computer program causes the computer to execute the corresponding processes implemented by the mobile terminal/terminal device in the various methods of the embodiments of this application. For the sake of brevity, it will not be described in detail here.

An embodiment of this application further provides a computer program product, including a computer program instruction.

Optionally, the computer program product may be applied to the network device in the embodiments of this application, and the computer program instruction causes the computer to execute the corresponding processes implemented by the network device in the various methods of the embodiments of this application. For the sake of brevity, it will not be described in detail here.

Optionally, the computer program product may be applied to the mobile terminal/terminal device in the embodiments of this application, and the computer program instruction causes the computer to execute the corresponding processes implemented by the mobile terminal/terminal device in the various methods of the embodiments of this application. For the sake of brevity, it will not be described in detail here.

An embodiment of this application further provides a computer program.

Optionally, the computer program may be applied to the network device in the embodiments of this application. When the computer program is executed by the computer, it causes the computer to execute the corresponding processes implemented by the network device in the various methods of the embodiments of this application. For the sake of brevity, it will not be described in detail here.

Optionally, the computer program may be applied to the mobile terminal/terminal device in the embodiments of this application. When the computer program is executed by a computer, it causes the computer to execute the corresponding processes implemented by the mobile terminal/terminal device in the various methods of the embodiments of this application. For the sake of brevity, it will not be described in detail here.

Those of ordinary skill in the art will appreciate that the units and algorithm steps described in the examples or the embodiments disclosed herein may be implemented in electronic hardware, in computer software, or in a combination of computer software and electronic hardware. Whether these functions are implemented in hardware or software depends on the specific application and design constraints of the technical solution. Those skilled in the art may use different methods to implement the described functions for each specific application, but such implementation should not be considered beyond the scope of this application.

Those skilled in the art can clearly understand that, for convenience and brevity of description, the specific working processes of the system, apparatus, and unit described above may be referred to the corresponding processes in the foregoing method embodiments, and will not be repeated here.

In the embodiments provided in this application, it should be understood that the disclosed system, apparatus, and method may be implemented in other ways. For example, the apparatus embodiments described above are merely illustrative. For instance, the division of units is only a logical functional division, and in actual implementation, there may be other division methods. For example, multiple units or components may be combined or integrated into another system, or some features may be omitted or not implemented. Furthermore, the coupling or direct coupling or communication connection shown or discussed may be via some interfaces; and the indirect coupling or communication connection between apparatuses or units may be in electrical, mechanical, or another form.

The units described as separate components may or may not be physically separate. The components shown as units may or may not be physical units; that is, they may be located in one place or distributed across multiple network units. Some or all of the units may be selected as needed to achieve the objectives of the embodiments.

In addition, each functional units in the various embodiments of this application may be integrated into one processing unit, or each unit may exist physically alone, or two or more units may be integrated into one unit.

If the described function is implemented in the form of a software functional unit and sold or used as an independent product, it may be stored in a computer-readable storage medium. Based on such an understanding, essential parts, or parts contributing to the prior art, or part of the technical solution of this application may be implemented in a form of a software product. The computer software product is stored in a storage medium, and includes instructions to cause a computer device (which can be a personal computer, a server, or a network device, etc.) to execute all or part of the steps of the methods described in various embodiments of this application. The aforementioned storage medium includes: a USB flash disk, removable hard disk, Read-Only Memory (ROM), Random Access Memory (RAM), magnetic disk or optical disc and other medium that can store program code.

The above are merely specific embodiments of this application, but the protection scope of this application is not limited thereto. Any variations or substitutions that can be easily conceived by those skilled in the art within the technical scope disclosed in this application should be included within the protection scope of this application. Therefore, the protection scope of this application should be determined by the scope of the claims.

**Claims**

1. A Timing Advance (TA) obtaining method, comprising:

   receiving, by a terminal device, a first signaling sent by a network device, wherein the first signaling is used to instruct, or configure, or activate a first operation on a first cell, and the first operation comprises at least one of the following: measurement, downlink synchronization, or uplink synchronization;
   performing, by the terminal device, the first operation on the first cell, and obtaining, by the terminal device, a Timing Advance (TA) of the first cell based on the first operation.

2. The method according to claim 1, further comprising:
   determining a first time difference between the first cell and a second cell based on the first operation.

3. The method according to claim 2, wherein the obtaining the TA of the first cell based on the first operation comprises:
   determining the TA of the first cell based on a TA of the second cell and the first time difference.

4. The method according to claim 1, wherein the first signaling comprises a second time offset corresponding to the first cell.

5. The method according to claim 2, wherein the determining the TA of the first cell based on the first operation comprises:
determining the TA of the first cell based on a TA of the second cell, the first time difference, and a second time offset.

6. The method of claim 4, wherein the second time offset comprises at least one of the following:

a time offset corresponding to an uplink TA adjustment;
a time offset corresponding to a downlink timing error; or
a time offset corresponding to an uplink-downlink transition.

7. The method according to claim 1, wherein

after receiving the first signaling, the terminal device is capable of obtaining the TA of the first cell; and/or
after a first time period has elapsed following receipt of the first signaling, the terminal device is capable of obtaining the TA of the first cell; and/or
after a second time period has elapsed following sending of an acknowledgment message corresponding to the first signaling, the terminal device is capable of obtaining the TA of the first cell.

8. The method according to claim 1, further comprising:
sending, by the terminal device, first information or a second signaling to the network device.

9. The method according to claim 8, wherein the first information or the second signaling is used to instruct that the terminal device has obtained the TA of the first cell.

10. The method according to claim 8, wherein the first information comprises at least one of the following: a first time difference between the first cell and a second cell, the TA of the first cell, an identifier of the first cell, or first indication information, wherein the first indication information is used to instruct that the terminal device has obtained the TA of the first cell.

11. The method according to claim 10, wherein the first information is transmitted by a first uplink resource;

the first uplink resource is indicated by uplink scheduling information comprised in the first signaling; or

the first uplink resource is obtained through a Scheduling Request (SR) of the terminal device.

12. The method according to claim 8, wherein the second signaling is a specific SR, and the specific SR is used to instruct that the terminal device has obtained the TA of the first cell.

13. The method according to claim 8, wherein the first information is reporting information of the first cell, and the reporting information of the first cell is used to instruct that the terminal device has obtained the TA of the first cell.

14. The method according to claim 13, wherein a reporting mechanism of the reporting information is periodic reporting, or semi-persistent reporting, or aperiodic reporting.

15. The method according to claim 13, wherein the reporting information is transmitted by a second uplink resource;
the second uplink resource is indicated by uplink grant information comprised in the first signaling.

16. The method according to any one of claims 1 to 15, further comprising:
receiving, by the terminal device, a switch command sent by the network device, wherein the switch command is used to instruct the terminal device to switch to a third cell; wherein the switch command comprises at least one of the following: an identifier of the third cell, or a TA of the third cell.

17. The method according to claim 16, further comprising:

when the switch command comprises the TA of the third cell, the terminal device uses the TA of the third cell comprised in the switch command to perform uplink transmission to the third cell; and/or
when the switch command does not comprise the TA of the third cell, the terminal device uses a calculated TA of the third cell to perform uplink transmission to the third cell.

18. The method according to any one of claims 1 to 15, wherein the first signaling is a Medium Access Control Control Element (MAC CE) or a Radio Resource Control (RRC) signaling.

19. A Timing Advance (TA) obtaining method, comprising:
sending, by a network device, a first signaling to a terminal device, wherein the first signaling is used to instruct, or configure, or activate a first operation on a first cell, and the first operation comprises at least one of the following: measurement, downlink synchronization, or uplink synchronization, wherein the first operation is used to obtain a Timing Advance (TA) of the first cell.

20. The method of claim 19, wherein the first signaling comprises a second time offset corresponding to the first cell.

21. The method of claim 20, wherein the second time offset comprises at least one of the following:

a time offset corresponding to an uplink TA adjustment;
a time offset corresponding to a downlink timing error; or
a time offset corresponding to an uplink-downlink transition.

22. The method according to claim 19, further comprising:

after sending the first signaling, the terminal device is capable of obtaining the TA of the first cell; and/or
after a first time period has elapsed following sending of the first signaling, the terminal device is capable of obtaining the TA of the first cell; and/or
after a second time period has elapsed following receipt of an acknowledgment message corresponding to the first signaling, the terminal device is capable of obtaining the TA of the first cell.

23. The method according to claim 19, further comprising:
receiving, by the network device, first information or a second signaling sent by the terminal device.

24. The method according to claim 23, wherein the first information or the second signaling is used to instruct that the terminal device has obtained the TA of the first cell.

25. The method according to claim 23, wherein the first information comprises at least one of the following: a first time difference between the first cell and a second cell, the TA of the first cell, an identifier of the first cell, or first indication information, wherein the first indication information is used to instruct that the terminal device has obtained the TA of the first cell.

26. The method according to claim 25, wherein the first information is transmitted by a first uplink resource;

the first uplink resource is indicated by uplink scheduling information comprised in the first signaling; or
the first uplink resource is obtained through a Scheduling Request (SR) of the terminal device.

27. The method according to claim 23, wherein the second signaling is a specific SR, and the specific SR is used to instruct that the terminal device has obtained the TA of the first cell.

28. The method according to claim 23, wherein the first information is reporting information of the first cell, and the reporting information of the first cell is used to instruct that the terminal device has obtained the TA of the first cell.

29. The method according to claim 28, wherein a reporting mechanism of the reporting information is periodic reporting, or semi-persistent reporting, or aperiodic reporting.

30. The method according to claim 28, wherein the reporting information is transmitted by a second uplink resource;
the second uplink resource is indicated by uplink grant information comprised in the first signaling.

31. The method according to any one of claims 19 to 30, further comprising:
sending, by the network device, a switch command to the terminal device, wherein the switch command is used to instruct the terminal device to switch to a third cell; wherein the switch command comprises at least one of the following: an identifier of the third cell, or a TA of the third cell.

32. The method according to any one of claims 19 to 30, wherein the first signaling is a Medium Access Control Control Element (MAC CE) or a Radio Resource Control (RRC) signaling.

33. A Timing Advance (TA) obtaining apparatus, applied to a terminal device, the apparatus comprising:

a receiving unit, configured to receive a first signaling sent by a network device, wherein the first signaling is used to instruct, or configure, or activate a first operation on a first cell, and the first operation comprises at least one of the following: measurement, downlink synchronization, or uplink synchronization;
a determining unit, configured to perform the first operation on the first cell, and obtain a Timing Advance (TA) of the first cell based on the first operation.

34. A Timing Advance (TA) obtaining apparatus, applied to a network device, the apparatus comprising:
a sending unit, configured to send a first signaling to a terminal device, wherein the first signaling is used to instruct, or configure, or activate a first operation on a first cell, and the first operation comprises at least one of the following: measurement, downlink synchronization, or uplink synchronization, wherein the first operation is used to obtain a Timing Advance (TA) of the first cell.

**35.** A terminal device, comprising: a processor and a memory, wherein the memory is configured to store a computer program, and the processor is configured to call and execute the computer program stored in the memory to perform the method according to any one of claims 1 to 18.

**36.** A network device comprising: a processor and a memory, wherein the memory is configured to store a computer program, and the processor is configured to call and execute the computer program stored in the memory to perform the method according to any one of claims 19 to 32.

**37.** A computer-readable storage medium for storing a computer program, wherein the computer program is used to cause a computer to perform the method according to any one of claims 1 to 18, or the method according to any one of claims 19 to 32.

**100**

**FIG. 1**

serving cell                    UE                    candidate cell

1) serving cell instructs the UE to send the PRACH to a candidate cell

2) UE sends the PRACH to the candidate cell according to the instructions of the serving cell

3-1) candidate cell informs the UE of the obtained TA

3-2) candidate cell informs the serving cell of the obtained TA

4) serving cell informs the UE of the TA of the candidate cell

5) serving cell sends a switch command to the UE, informing the UE to switch to the target cell (i.e., the candidate cell)

**FIG. 2-1**

serving cell            UE         candidate cell #1    candidate cell #2

1) send a downlink signal

2) sends a downlink signal

3) send a downlink signal

4) UE calculates the TA of
the candidate cell #1 and the
TA of the candidate cell #2

serving cell is unaware
of whether the UE has
obtained the TA of the
target cell

5) serving cell sends a switch
command to the UE, informing the
UE to switch to the target cell

**FIG. 2-2**

receiving, by a terminal device, a first signaling sent by a network
device, wherein the first signaling is used to instruct, or configure,
or activate a first operation on a first cell, and the first operation
includes at least one of the following: measurement, downlink
synchronization, or uplink synchronization

301

performing, by the terminal device, the first operation on the first
cell, and obtaining, by the terminal device, a TA of the first cell
based on the first operation

302

**FIG. 3**

sending, by a network device, a first signaling to a terminal device,
wherein the first signaling is used to instruct, or configure, or
activate a first operation on a first cell, and the first operation
includes at least one of the following: measurement, downlink
synchronization, or uplink synchronization, wherein the first
operation is used to obtain a TA of the first cell

401

**FIG. 4**

base station                    UE            candidate cell #1      candidate cell #2

501: first signaling

502: downlink signal

502: downlink signal

503: UE measures the downlink
signals of the candidate cell #1
and candidate cell #2

504: calculate the TA of the candidate
cell #1, and calculate the TA of the
candidate cell #2

505: first information or a
second signaling

506: switch command

**FIG. 5**

downlink
signal (such
as SSB#1)

downlink
signal (such
as SSB#2)

Cell 1                       Cell 2

**FIG. 6**

FIG. 7-1

FIG. 7-2

**FIG. 7-3**

**FIG. 8**

TA obtaining apparatus

sending unit 901

receiving unit 902

**FIG. 9**

communication device 1000

memory 1020

processor 1010

transceiver 1030

**FIG. 10**

chip 1100

input interface 1130

processor 1110

memory 1120

output interface 1140

**FIG. 11**

## INTERNATIONAL SEARCH REPORT

| International application No. |
| --- |
| **PCT/CN2024/101648** |

**A.    CLASSIFICATION OF SUBJECT MATTER**

H04W 56/00(2009.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNKI; CNTXT; ENTXTC; VCN; ENTXT; VEN; WPABS; DWPI: 3GPP: 小区, 切换, 上行, 下行, 中断, 时延, 同步, 测量, 时间, 定时提前, cell, switch, uplink, downlink, TA, timing advance, measure, time, offset, interruption

**C.    DOCUMENTS CONSIDERED TO BE RELEVANT**

| Category* | Citation of document, with indication, where appropriate, of the relevant passages | Relevant to claim No. |
| --- | --- | --- |
| X | CN 115529624 A (HUAWEI TECHNOLOGIES CO., LTD.) 27 December 2022 (2022-12-27) description, paragraphs [0001]-[0305], and figures 1-9 | 1-37 |
| X | CN 115811764 A (VIVO MOBILE COMMUNICATION CO., LTD.) 17 March 2023 (2023-03-17) description, paragraphs [0001]-[0363], and figures 1-15 | 1-37 |
| A | CN 113647128 A (GUANGDONG OPPO MOBILE TELECOMMUNICATIONS CORP., LTD.) 12 November 2021 (2021-11-12) entire document | 1-37 |
| A | US 2020045745 A1 (COMCAST CABLE COMMUNICATIONS, LLC) 06 February 2020 (2020-02-06) entire document | 1-37 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 September 2024** | **01 October 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/101648**

| Patent document cited in search report | | | Publication date (day/month/year) | Patent family member(s) | | | Publication date (day/month/year) |
|---|---|---|---|---|---|---|---|
| CN | 115529624 | A | 27 December 2022 | None | | | |
| CN | 115811764 | A | 17 March 2023 | None | | | |
| CN | 113647128 | A | 12 November 2021 | None | | | |
| US | 2020045745 | A1 | 06 February 2020 | EP | 3606272 | A1 | 05 February 2020 |
| | | | | EP | 3606272 | B1 | 04 October 2023 |
| | | | | CA | 3051139 | A1 | 03 February 2020 |
| | | | | US | 2024147540 | A1 | 02 May 2024 |
| | | | | US | 2022312495 | A1 | 29 September 2022 |
| | | | | US | 11917692 | B2 | 27 February 2024 |
| | | | | US | 11388755 | B2 | 12 July 2022 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310773398